# EUROPEAN PATENT APPLICATION

(11) **EP 4 737 804 A1**
(43) Date of publication of application: **06.05.2026**
(21) Application number: 25212204.9
(22) Date of filing: 30.10.2025
(51) Int. Cl.: F24C 7/08, F24C 15/32

(54) **COOKING APPLIANCE AND CONTROL METHOD THEREOF**

(30) Priority: 05.11.2024 KR 20240155167
(71) Applicant: LG Electronics Inc., Yeongdeungpo-gu Seoul 07336 (KR)
(72) Inventor: LEE, Suyong, 07796 Seoul (KR); PARK, Kyoung-Joon, 07796 Seoul (KR); YANG, Jaekyung, 07996 Seoul (KR); KWAG, Dongseong, 07796 Seoul (KR); YANG, Hak Soon, 07796 Seoul (KR)
(74) Representative: Schott, Jakob Valentin

(57) **Abstract**

An invention relating to a cooking appliance and a control method thereof is disclosed. Based on an image obtained from imaging of a cooking chamber, the chamber is divided into a plurality of separate areas, the state of a cooking subject is ascertained for each area, and the operation of a heating device is controlled so that hot air is supplied to an area selected according to the ascertained states.

## Description

The present invention relates to a cooking appliance, and more particularly, to a cooking appliance provided with a camera that photographs the inside of a cooking chamber and to a control method thereof.

A cooking appliance is a household electric appliance for cooking food, which is installed in a kitchen space and cooks food according to a user's intention. Such cooking appliances can be classified in various ways according to the heat source used, their form, or the type of fuel.

When classifying cooking appliances according to the form in which food is cooked, they can be classified as open-type and closed-type cooking appliances depending on the form of the space where the food is placed. Closed-type cooking appliances include ovens and microwave ovens, and open-type cooking appliances include cooktops, hobs, and griddles.

A closed-type cooking appliance is a cooking appliance that shields the space where food is located and cooks the food by heating the shielded space. A closed-type cooking appliance is provided with a cooking chamber which is the space that is shielded when food is placed and cooking is to be performed. This cooking chamber is, in effect, the space in which the food is actually cooked.

In a closed-type cooking appliance, a door is provided so as to be rotatable to selectively open and close the cooking chamber. The door is rotatably mounted to a main body by a door hinge provided between the main body in which the cooking chamber is formed and the door. The door rotates about a portion coupled to the main body via the door hinge, thereby enabling the cooking chamber to be selectively opened and closed.

A heat source is provided in the internal space of the cooking chamber that is opened and closed by the door to heat the cooking chamber. As the heat source, a gas burner or an electric heater may be used.

Recently, closed-type cooking appliances providing an automatic cooking function have been developed. A closed-type cooking appliance providing an automatic cooking function can acquire information such as the appearance or the weight of food accommodated inside the cooking chamber, and can control the cooking operation of the appliance using the acquired information. In such cooking appliances, the type, size, thickness, weight, and the like of the food must be accurately ascertained in order for the automatic cooking function to be provided effectively.

In addition, closed-type cooking appliances equipped with a built-in camera have recently been developed. Such cooking appliances can obtain an image related to the food accommodated in the cooking chamber by means of the built-in camera. The image acquired by the built-in camera may be used to be displayed on a display provided in the cooking appliance or on a user's smart device, and may also be used as data for controlling the cooking operation of the cooking appliance.

When the image acquired by the built-in camera is used as data for controlling the cooking operation of the cooking appliance, the cooking appliance can analyze the food-related image obtained by the built-in camera to determine the type of food or to judge the cooking progress of the food, and can control the cooking operation of the cooking appliance based on the thus-analyzed information.

In a cooking appliance that provides an automatic cooking function as described above, the judgment of cooking progress of the food-namely, the judgment of the degree of doneness-may mainly be performed in a manner of identifying the surface color of the food. In this case, the cooking appliance can ascertain the overall doneness state of the food through the food-related image acquired by the built-in camera and can control the cooking operation of the cooking appliance based on the thus-ascertained information.

Meanwhile, the cooking appliance may use the food-related image acquired by the built-in camera to ascertain the doneness state of the food by each part. For example, the cooking appliance can ascertain how the doneness state of a front portion and a rear portion of the food differs, or how the doneness state of an upper portion and a lower portion of the food differs.

However, even if the cooking appliance can ascertain the doneness state of the food by each part, if heat energy cannot be concentrated to a target portion by part, it becomes very difficult to secure uniformity of cooking quality.

An object of the present invention is to provide a cooking appliance and a control method thereof capable of improving the uniformity of cooking quality.

Another object of the present invention is to provide a cooking appliance and a control method thereof capable of offering an automatic cooking function that enhances the uniformity of cooking quality.

A further object of the present invention is to provide a cooking appliance and a control method thereof capable of concentrating heating energy onto a target portion among various portions of a cooking subject.

Preferably, a control method of a cooking appliance according to an embodiment of the present invention for achieving the above object is characterized in that, based on an image obtained as a result of an imaging step of the cooking chamber, the cooking chamber is divided into a plurality of separate areas, the state of a cooking subject in each of the separate areas is determined, and the operation of the heating device is controlled so that hot air is supplied to an area selected based on the determination results.

Another embodiment of the present invention is characterized in that the operation of the heating device is controlled so that hot air is supplied toward a selected area, which is one of the separate areas determined based on the state of the cooking subject, wherein the operation of the heating device is controlled such that at least one of a discharge position and a reach distance of a main stream of hot air discharged from the heating device is adjusted.

According to one aspect of the present invention, a control method of a cooking appliance may include: an imaging step of imaging the cooking chamber with the camera; a state determination step of dividing the cooking chamber into a plurality of separate areas based on the image acquired by the camera and determining the state of the cooking subject in each of the separate areas; an area selection step of selecting, among the plurality of separate areas, a target area to which hot air is to be supplied, based on the state of the cooking subject determined in the state determination step; and a heating operation adjustment step of controlling the operation of the heating device so that hot air is supplied toward the selected area.

Preferably, in the heating operation adjustment step, the operation of the heating device is controlled such that at least one of a discharge position and a reach distance of a main stream of hot air discharged from the heating device is adjusted.

Preferably, in the heating operation adjustment step, a position of the selected area in a front-rear direction is determined, and the operation of the heating device is controlled such that the reach distance of the main stream of hot air discharged from the heating device is adjusted.

Preferably, the heating device may include a fan rotatable to supply hot air into the cooking chamber.

Preferably, in the heating operation adjustment step, the rotational speed of the fan is adjusted.

Preferably, in the heating operation adjustment step, the closer the position of the selected area is to the front, the higher the rotational speed of the fan is increased.

Preferably, in the heating operation adjustment step, a position of the selected area on a coordinate plane orthogonal to the front-rear axis is determined, and the operation of the heating device is controlled such that the discharge position of the main stream of hot air discharged from the heating device is adjusted.

Preferably, in the heating operation adjustment step, both a position of the selected area in the front-rear direction and a position of the selected area on a coordinate plane orthogonal to the front-rear axis are determined, and the operation of the heating device is controlled such that both the reach distance and the discharge position of the main stream of hot air discharged from the heating device are adjusted.

Preferably, the heating device may include a fan configured to rotate in both a forward direction and a reverse direction about a front-rear axis.

Preferably, the discharge position of the main stream of hot air discharged from the heating device varies according to the rotation direction of the fan.

Preferably, in the heating operation adjustment step, the rotation direction of the fan is adjusted according to the position of the selected area on the coordinate plane.

Preferably, in the heating operation adjustment step, the heating amount of the heating device is adjusted according to the position of the selected area on the coordinate plane.

Another aspect of the present invention provides a cooking appliance comprising: a main body having a cooking chamber formed therein; a camera for imaging the cooking chamber; a controller configured to divide the cooking chamber into a plurality of separate areas based on an image acquired by the camera and to select, as a selected area, one of the separate areas to which hot air is to be supplied; and a heating device operable to supply hot air toward the selected area.

Preferably, the controller controls the operation of the heating device such that at least one of a discharge position and a reach distance of a main stream of hot air discharged from the heating device is adjusted.

Preferably, the heating device may include a fan cover having a first front discharge port and a second front discharge port, and a fan rotatable about a front-rear axis.

Preferably, on a coordinate plane orthogonal to a rotation axis of the fan and having an origin located on the rotation axis of the fan, the first front discharge port and the second front discharge port are disposed at different positions.

Preferably, the fan rotates in a forward direction to discharge a main stream of hot air from inside the heating device into the cooking chamber through the first front discharge port, or rotates in a reverse direction to discharge a main stream of hot air from inside the heating device into the cooking chamber through the second front discharge port.

Preferably, the controller adjusts the rotation direction of the fan according to the position of the selected area on the coordinate plane.

Preferably, the first front discharge port and the second front discharge port are disposed at a front surface of the fan cover.

Preferably, among quadrants of the coordinate plane divided by a front-rear axis and a vertical axis intersecting at the origin, the first front discharge port is disposed in at least one of a second quadrant and a fourth quadrant, and the second front discharge port is disposed in at least one of a first quadrant and a third quadrant.

According to the cooking appliance and its control method of the present invention, heating can be performed on the cooking subject by concentrating heat on areas requiring a higher level of heating compared to other parts, thereby improving the uniformity of cooking quality.

Furthermore, the present invention provides an automatic cooking function that can enhance cooking quality while ensuring uniformity. This is achieved by automatically detecting the state of the cooking subject in each designated area and using this detection result to concentrate heat on the target area requiring focused heating.

Furthermore, the present invention enables more intensive heating of specific desired areas within the food item. This allows for the provision of a wider variety of cooking results according to the user's intent, thereby more effectively enhancing user satisfaction.

### BRIEF DESCRIPTION OF DRAWINGS

FIG. 1 is a perspective view showing a cooking appliance according to an embodiment of the present invention.
FIG. 2 is a front view showing an open state of a door of the cooking appliance shown in FIG. 1.
FIG. 3 is a side sectional view showing an internal structure of the cooking appliance shown in FIG. 1.
FIG. 4 is a side sectional view showing a mounted state of a rack shown in FIG. 3.
FIG. 5 is a side sectional view showing a structure of a convection device shown in FIG. 3.
FIG. 6 is a front perspective view showing a fan cover shown in FIG. 5 with the cover separated.
FIG. 7 is a front view showing the fan cover shown in FIG. 5 with the cover separated.
FIG. 8 is a front view showing a fan shown in FIG. 5 with the fan separated.
FIG. 9 is a diagram schematically showing a discharge position of a main stream of hot air during forward rotation of the fan.
FIG. 10 is a diagram schematically showing a discharge position of a main stream of hot air during reverse rotation of the fan.
FIG. 11 is a schematic configuration diagram showing a configuration of a cooking appliance according to an embodiment of the present invention.
FIG. 12 is a schematic diagram showing an example in which the interior of the cooking chamber is divided into a plurality of separate areas.
FIG. 13 is a flowchart showing a control process of the cooking appliance according to an embodiment of the present invention.

### DETAILED DESCRIPTION

The above-described aspects, features and advantages are specifically described hereafter with reference to accompanying drawings such that one having ordinary skill in the art to which the disclosure pertains can embody the technical spirit of the disclosure easily. In the *disclosure, detailed description* of known technologies in relation to the subject matter of the disclosure *is* omitted if it is deemed to *make* the *gist* of the *disclosure* unnecessarily *vague* Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components are not to be limited by the terms. Certainly, a first component can be a second component, unless stated to the contrary.

Embodiments are not limited to the embodiments set forth herein, and can be modified and changed in various different forms. The embodiments in the disclosure are provided such that the disclosure can be through and complete and fully convey its scope to one having ordinary skill in the art. Accordingly, *all modifications, equivalents or replacements as well as a replacement of the configuration of any one embodiment with the configuration of another embodiment or an addition of the configuration of any one embodiment to the configuration of another embodiment, within* the technical spirit and scope of the disclosure, *are to be included in* the scope of the disclosure.

The accompanying drawings are provided for a better understanding of the embodiments set forth herein and are not intended to limit the technical spirit of the disclosure. It is to be understood that *all the modifications, equivalents or replacements within* the spirit and technical scope of the disclosure *are included in* the scope of the disclosure. The sizes or thicknesses of the components in the drawings are exaggerated or reduced to ensure ease of understanding and the like. However, the protection scope of the subject matter of the disclosure is not to be interpreted in a limited way.

The terms in the disclosure are used only to describe specific embodiments or examples and not intended to limit the subject matter of the disclosure. In the disclosure, singular forms include plural forms as well, unless explicitly indicated otherwise. In the disclosure, the terms "comprise", "comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as "connected" or "coupled" to another component, any one component can be directly connected or coupled to another component, but an additional component can be "interposed" between the two components or the two components can be "connected" or "coupled" by an additional component. When any one component is described as "directly connected" or "directly coupled" to another component, an additional component cannot be "interposed" between the two components or the two components cannot be "connected" or "coupled" by an additional component.

When any one component is described as being "on (or under)" another component, any one component can be directly on (or under) another component, and an additional component can be interposed between the two components.

Unless otherwise defined, all the terms including technical or scientific terms used herein have the same meaning as commonly understood by one having ordinary skill in the art. Additionally, terms such as those defined in commonly used dictionaries are to be interpreted as having a meaning that is consistent with their meaning in the context of the relevant art, and unless explicitly defined herein, are not to be interpreted in an ideal way or an overly formal way.

In the state where a cooking appliance stands on the floor, a direction in which a door is installed with respect to the center of the cooking appliance is defined as a forward direction. Accordingly, a direction toward the inside of the cooking appliance with the door open is defined as a rearward direction. For convenience, the forward direction and the rearward direction can be referred to as a first direction. Then the forward direction is referred to as one direction of the first direction, and the rearward direction is referred to as the other direction of the first direction.

Additionally, a gravitational direction can be defined as a downward direction, and a direction opposite to the gravitational direction can be defined as an upward direction.

Further, a horizontal direction across a front-rear direction of the cooking appliance, i.e., a widthwise direction of the cooking appliance that is seen in front of the door of the cooking appliance, can be referred to as a left-right direction. For convenience, the left-right direction can be referred to as a second direction. Then the right side can be referred to as one direction of the second direction, and the left side can be referred to as the other direction of the second direction.

Further, the widthwise direction of the cooking appliance can also be referred to as a lateral direction. Then the right side can also be referred to as one side of the lateral direction, and the left side can be referred to the other side of the lateral direction.

Additionally, an up-down direction can be referred to as a third direction. Then an upward direction can be referred to as one direction of the third direction, and a downward direction can be referred to as the other direction of the third direction.

Furthermore, the up-down direction can be referred to as a vertical direction. Then the front-rear direction and the left-right direction, i.e., the first direction and the second direction, can be referred to as the horizontal direction.

Throughout the disclosure, the terms "A and/or B" as used herein can denote A, B or A and B, and the terms "C to D" can denote C or greater and D or less, unless stated to the contrary.

### [Overall Structure of the Cooking Appliance]

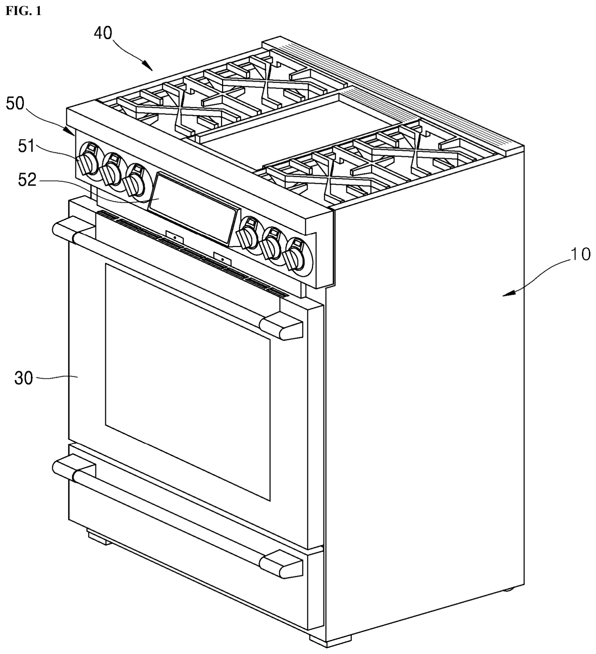

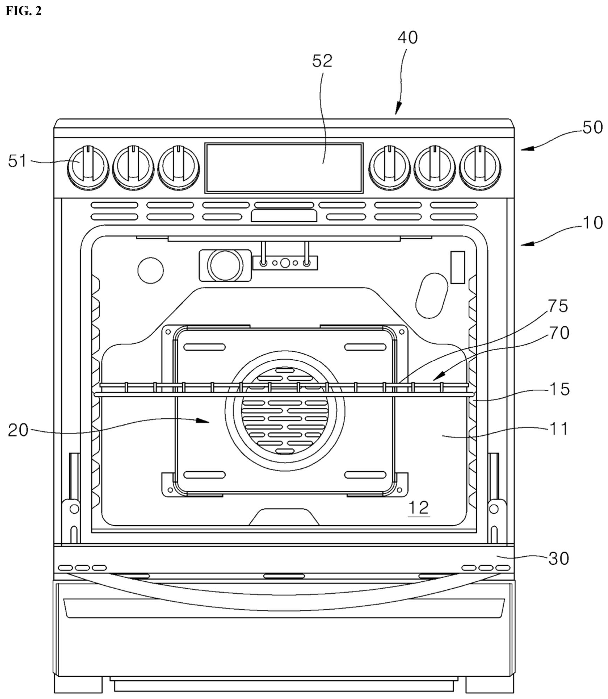

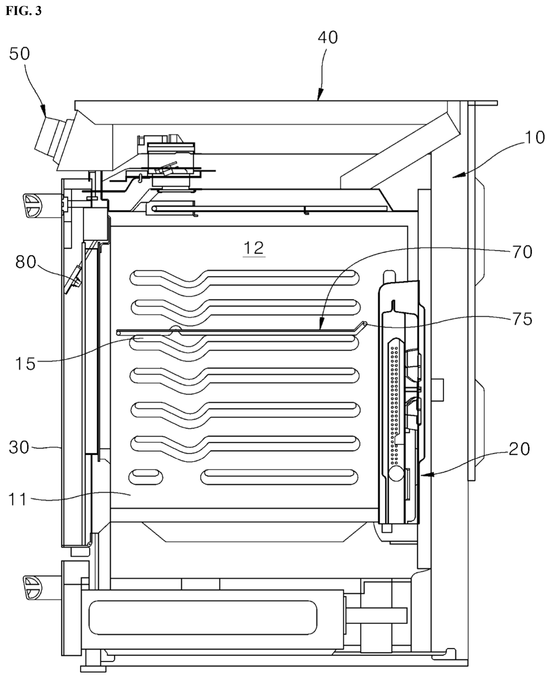

FIG. 1 is a perspective view of a cooking appliance according to an embodiment of the present invention, FIG. 2 is a side sectional view showing the internal structure of the cooking appliance shown in FIG. 1, and FIG. 3 is a front view showing an open state of the door of the cooking appliance shown in FIG. 1.

Referring to FIGs. 1 to 3, the exterior of the cooking appliance may be formed by a main body 10. The main body 10 may be provided in a form including a substantially rectangular-parallelepiped shape and may be formed of a material having a predetermined strength so as to protect a plurality of parts installed in its internal space.

The main body 10 includes a cavity 11 forming a frame of the main body 10. The cavity 11 may be formed as a hexahedral shape whose front is open, and a cooking chamber 12 is provided inside the cavity 11.

The cavity 11 may be formed as a hexahedral shape whose front is open, and the cooking chamber 12 may be formed inside the cavity 11. That is, the cooking chamber 12 may be formed as a substantially hexahedral space arranged inside the cavity 11, and may be formed as a space open toward the front.

With the cooking chamber 12 thus shielded, cooking of food may be performed as the inside of the cooking chamber 12 is heated. That is, in the cooking appliance of this embodiment provided as a sealed type, the cooking chamber 12 is, in effect, the space where food is cooked.

A heating device for heating the cooking chamber 12 is provided in the cooking appliance. The heating device may be provided as a burner using gas fuel or as a heater using electricity. As such, the structure of the heating device may change depending on the type of heat source used.

For example, the heating device may include a convection device 20 disposed at a rear side of the cooking chamber 12. The convection device 20 causes air to flow by drawing air inside the cooking chamber 12, heating it, and then discharging it back into the cooking chamber 12, thereby allowing the internal space of the cooking chamber 12 to be heated uniformly.

The heating device may further include a broil burner or a broil heater. The broil burner or broil heater may be disposed at an upper portion of the cooking chamber 12 to heat the interior space of the cooking chamber 12 from above.

A door 30 may be provided in the cooking appliance so as to be rotatable to selectively open and close the cooking chamber 12. For example, the door 30 may be provided in a pull-down manner in which an upper end rotates up and down about its lower end to open and close the cooking chamber 12.

A cooktop section 40 may be disposed on an upper side of the main body 10 and is provided to heat food or a container containing food to cook the food. The cooktop section 40 may be provided with a top plate that forms the upper exterior while closing an upper end of the main body 10.

At least one heating part may be provided in a central portion of the cooktop section 40 to heat food to be cooked or a container containing food. For example, the heating part may be provided as a heating device using gas fuel.

In another example, the heating part may be provided as an induction heater using electricity. As such, the structure of the heating part may change depending on the type of heat source used.

A control panel 50 may be provided at an upper front of the cooking appliance, that is, at an upper front portion of the cavity 11. The control panel 50 may form a part of the front exterior of the cooking appliance. The control panel 50 may be provided with a knob 51 for controlling the operation of the cooking appliance and a display 52 for displaying an operating state of the cooking appliance.

An electrical compartment 60 may be provided in an internal space of the main body 10, that is, in a space between the cooktop section 40 and the cooking chamber 12, which provides a space where electrical parts are located. The electrical compartment 60 may be a space formed between the cooktop section 40 and the cooking chamber 12, or may be a space conceptualized as a combination of the space formed between the cooktop section 40 and the cooking chamber 12 and a space inside the cooktop section 40. A front of the electrical compartment 60 may be shielded by the control panel 50, or, as illustrated in this embodiment, may be shielded by the door 30.

### [Structure Related to Rack Mounting]

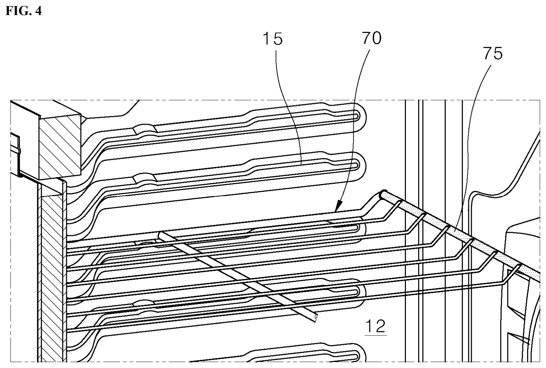

FIG. 4 is a side sectional view showing a state in which a rack is mounted in a cooking appliance according to an embodiment of the present invention.

As shown in FIGs. 2 to 4, the cooking appliance of this embodiment may include a rack 70 provided to place food thereon. For example, the rack 70 may be formed in a shape corresponding to a bottom surface shape of the cooking chamber 12, such as a rectangular planar shape.

The rack 70 supports food from below and may be mounted inside the cooking chamber 12. The rack 70 may be used to position food placed thereon at a height desired by a user and may be mounted inside the cooking chamber 12 or withdrawn to the outside of the cooking chamber 12 as necessary.

In order for the rack 70 to be mounted inside the cooking chamber 12, mounting protrusions 15 may be provided inside the cooking chamber 12. The mounting protrusions 15 may be provided on respective side walls of the cavity 11 forming both side surfaces of the cooking chamber 12.

Each mounting protrusion 15 may be formed to protrude from the side wall of the cavity 11 toward the inside of the cooking chamber 12. That is, each mounting protrusion 15 may be formed in a shape that bulges laterally toward the cooking chamber 12 from the side wall of the cavity 11.

Each mounting protrusion 15 as described above may be formed integrally with the cavity 11. For example, the mounting protrusion 15 may be formed integrally with the cavity 11 by being formed together with the side wall of the cavity 11 during molding of the cavity 11. The mounting protrusion 15 may be formed in such a way that a part of a surface forming the side wall of the cavity 11 is pressed toward the inside of the cooking chamber 12 so as to protrude toward the cooking chamber 12.

The mounting protrusion 15 forming part of the cavity 11 and formed together with the cavity 11 as described above may be formed of the same material as the cavity 11, and may be formed of a metal material having sufficient strength identical to that of the cavity 11. The mounting protrusion 15 may be formed to have sufficient strength to support the rack 70 mounted thereon and food supported by the rack 70.

A plurality of mounting protrusions 15 may be provided on each side wall of the cavity 11. The plurality of mounting protrusions 15 provided on each side wall of the cavity 11 are arranged along an up-down direction, and each mounting protrusion 15 may be disposed to be spaced apart from an adjacent mounting protrusion 15 by a predetermined interval in the up-down direction.

The mounting protrusions 15 provided on a left side wall of the cavity 11 and the mounting protrusions 15 provided on a right side wall of the cavity 11 are arranged to face each other laterally and may be disposed at the same height. For example, a pair of mounting protrusions 15 disposed at the lowest positions on the respective side walls of the cavity 11 may be disposed at the same height, and a pair of mounting protrusions 15 disposed at the highest positions on the respective side walls of the cavity 11 may be disposed at the same height.

In this embodiment, it is illustrated that seven mounting protrusions 15 are disposed on each side wall of the cavity 11. However, the present invention is not limited thereto, and the number of mounting protrusions 15 may be increased or decreased as necessary in consideration of, for example, the size of the cooking appliance.

The rack 70 may be seated on any one of the mounting protrusions 15 arranged along the up-down direction and be mounted inside the cooking chamber 12. A mounting position of the rack 70 may vary depending on which of the mounting protrusions 15 the rack 70 is seated on.

For example, if the rack 70 is seated on a mounting protrusion 15 disposed at the lowest position among the mounting protrusions 15, it may be expressed that the rack 70 is mounted at a first level. In another example, if the rack 70 is seated on a mounting protrusion 15 disposed at a third position from the bottom among the mounting protrusions 15, it may be expressed that the rack 70 is mounted at a third level.

Meanwhile, the rack 70 may be provided with a position indicator 75. The position indicator 75 may be provided to allow the position of the rack 70 to be easily identified. For example, the position indicator 75 may be formed to protrude upward more than other portions of the rack 70. In another example, the position indicator 75 may be formed so as to have a color different from the rest of the rack 70.

The position indicator 75 may be disposed at an end of the rack 70. For example, the position indicator 75 may be disposed at a front or rear end of the rack 70. In another example, the position indicator 75 may be disposed at a lateral end of the rack 70.

### [Structure of the Convection Device]

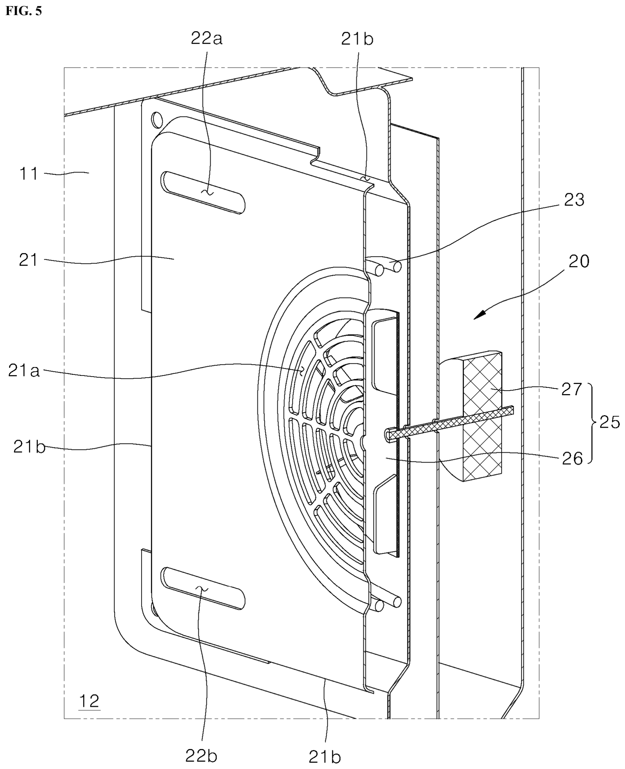

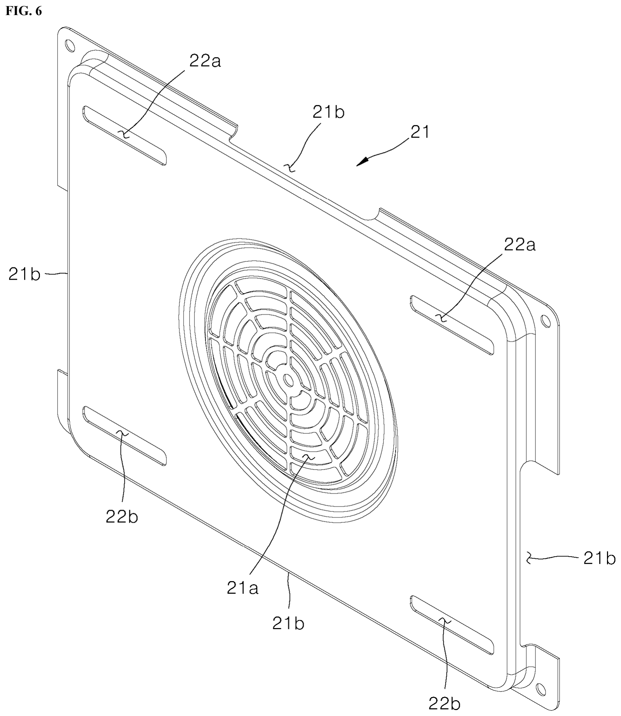

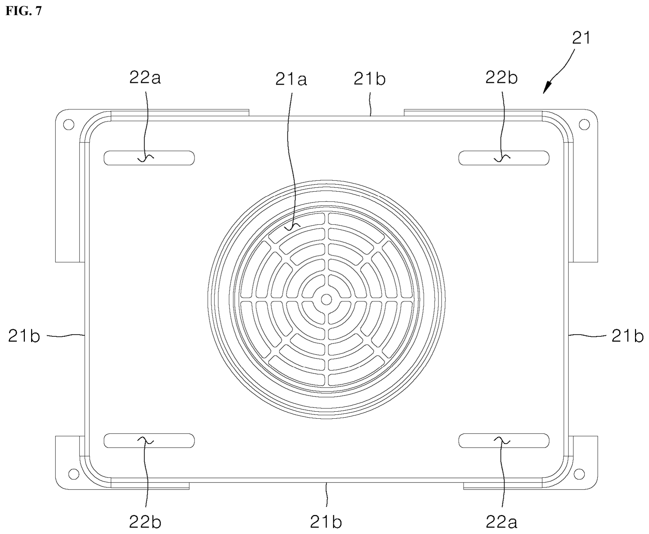

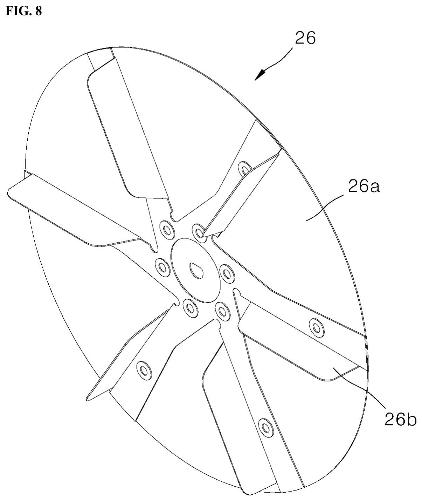

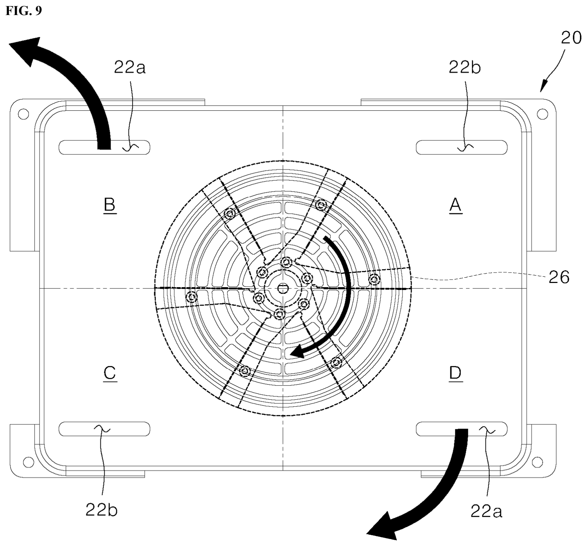

FIG. 5 is a side sectional view showing a structure of the convection device shown in FIG. 3, FIG. 6 is a front perspective view showing the fan cover shown in FIG. 5 with the cover separated, and FIG. 7 is a front view showing the fan shown in FIG. 5 with the fan separated. In addition, FIG. 8 is a diagram schematically showing the discharge position of a main stream of hot air during forward rotation of the fan, and FIG. 9 is a diagram schematically showing the discharge position of a main stream of hot air during reverse rotation of the fan.

As shown in FIGs. 3 and 5, a heating device is provided in the cooking appliance of this embodiment, and the heating device may include a convection device 20.

For example, the convection device 20 may include a fan cover 21, a heating unit 23, and a fan module 25. The fan cover 21 is disposed at a rear portion of the cooking chamber 12 and may be installed on a rear surface of the cavity 11. The fan cover 21 can form, inside the convection device 20, a space separated from the cooking chamber 12.

For example, the fan cover 21 may be formed in a hexahedral shape whose front faces the door 30 and whose side faces face the side faces of the cavity 11. An intake port 21a) is disposed at a central portion of a front surface of the fan cover 21, so that air inside the cooking chamber 12 can flow into an internal space of the convection device 20 through the intake port 21a).

The internal space of the convection device 20 formed by the fan cover 21 may accommodate the heating unit 23 and the fan module 25. The heating unit 23 is provided so as to heat air that has flowed into the internal space of the convection device 20. The heating unit 23 may be provided as a burner using gas fuel or as a heater using electricity.

Air heated by the heating unit 23 in the internal space of the convection device 20 may be discharged to the cooking chamber 12 by the fan module 25. That is, a hot-air flow is generated in the internal space of the convection device 20 by the heating unit 23 and the fan module 25, and the hot-air flow may be discharged into the cooking chamber 12 through a discharge port 21b).

As shown in FIGs. 5 to 7, the discharge port 21b) may be provided in the fan cover 21. The discharge port 21b) may be disposed on at least one of side surfaces, a top surface, and a bottom surface of the fan cover 21. In this embodiment, the discharge port 21b) is illustrated as being respectively disposed on both side surfaces, the top surface, and the bottom surface of the fan cover 21.

Each discharge port 21b) may be formed so as to penetrate the side surface, the top surface, or the bottom surface of the fan cover 21. The hot-air flow generated inside the convection device 20 may be discharged into the cooking chamber 12 through the discharge port 21b).

The fan module 25 is disposed in the internal space of the convection device 20 surrounded by the fan cover 21 and is configured to rotate about a front-rear axis. A rotational axis of the fan module 25 may be arranged at a position overlapping, in the front-rear direction, with the intake port 21a) disposed approximately at the center of the fan cover 21.

As shown in FIGs. 5 and 8, the fan module 25 may draw air in the cooking chamber 12 into the internal space of the convection device 20 through the intake port 21a), and may discharge air heated in the internal space of the convection device 20 into the cooking chamber 12 through the discharge port 21b).

For example, the fan module 25 may generate a flow of hot air that moves rearward from the cooking chamber 12 toward the internal space of the convection device 20 and moves in a centrifugal direction within the internal space of the convection device 20. The fan module 25 may include a fan 26 and a fan motor 27.

The fan 26 is provided so as to rotate about the front-rear axis to generate hot air. For example, the fan 26 may include a rotating plate 26a) and blades 26b).

The rotating plate 26a) may be coupled to a rotating shaft driven by the fan motor 27 and may rotate about the rotating shaft. For example, the rotating plate 26a) may be formed in a disk shape with the rotating shaft coupled to its center.

The blades 26b) may be formed to protrude forward from the rotating plate 26a). For example, a plurality of blades 26b) may be arranged radially around the rotating shaft, and the blades 26b) may rotate together with the rotating plate 26a).

The fan module 25 is configured such that its rotational direction can be adjusted. The fan module 25 may be provided to be rotatable in both directions about the front-rear axis. For example, the fan module 25 may be configured to rotate in a forward direction or in a reverse direction as needed.

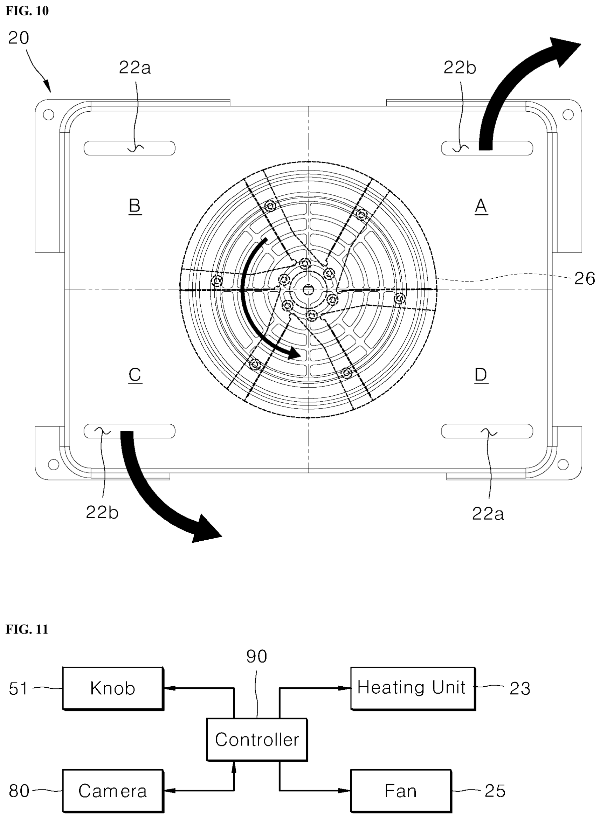

According to this embodiment, as shown in FIG. 9, when the fan module 25 rotates in the forward direction, the fan module 25 can blow hot air in a direction between the forward direction and the centrifugal direction. Also, as shown in FIG. 10, when the fan module 25 rotates in the reverse direction, the fan module 25 can blow hot air in a direction between the reverse direction and the centrifugal direction.

In addition, the fan module 25 is provided such that its rotational speed can be adjusted. The rotational speed of the fan module 25 may affect a travel distance of hot air discharged from the internal space of the convection device 20 to the cooking chamber 12. For example, as the rotational speed of the fan module 25 increases, the hot air can travel farther forward, and as the rotational speed of the fan module 25 decreases, the hot air can travel only a shorter distance forward.

Meanwhile, as shown in FIGs. 8 to 10, the fan cover 21 may further include front discharge ports 22a, 22b). The front discharge ports 22a, 22b) may be disposed on a front surface of the fan cover 21. For example, the intake port 21a) may be disposed at the center front of the fan cover 21, and a plurality of front discharge ports 22a, 22b) may be disposed so as to surround it. Each of the front discharge ports 22a, 22b) may be formed to penetrate the front surface of the fan cover 21 in the front-rear direction.

According to this embodiment, the front discharge ports 22a, 22b) may include a first front discharge port 22a) and a second front discharge port 22b). The first front discharge port 22a) and the second front discharge port 22b) are disposed on the front surface of the fan cover 21 but at different positions.

For example, on a coordinate plane parallel to the front surface of the fan cover 21, the first front discharge port 22a) and the second front discharge port 22b) may be disposed at different positions. Here, the coordinate plane may be a plane orthogonal to the rotational axis of the fan module 25, and an origin of the coordinate plane may be disposed on the rotational axis of the fan module 25.

The coordinate plane may be divided into quadrants by a front-rear axis and an up-down axis that meet at the origin. For example, the coordinate plane may have a first quadrant (A), a second quadrant (B), a third quadrant (C), and a fourth quadrant (D) arranged clockwise, and the first quadrant (A) may be disposed to the right and above the origin of the coordinate plane.

For example, the first front discharge port 22a) may be disposed on the front surface of the fan cover 21 in at least one of the second quadrant (B) and the fourth quadrant (D) of the coordinate plane. Also, the second front discharge port 22b) may be disposed on the front surface of the fan cover 21 in at least one of the first quadrant (A) and the third quadrant (C) of the coordinate plane.

### [Structure Related to Imaging of the Cooking Chamber and Control of the Cooking Appliance]

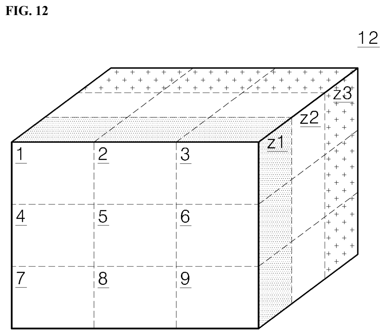

FIG. 11 is a schematic configuration diagram showing the configuration of a cooking appliance according to an embodiment of the present invention, and FIG. 12 is a schematic diagram showing an example in which the inside of the cooking chamber is divided into a plurality of separate areas.

Referring to FIGs. 3 and 11, the cooking appliance according to an embodiment of the present invention may include a camera 80. The camera 80 may be installed inside the cooking appliance and is provided to photograph the cooking chamber 12.

For example, the camera 80 may be disposed at a front side of the cooking chamber 12. For example, the camera 80 may be disposed inside the door 30. The camera 80 installed on the door 30 as described can acquire an image related to the food accommodated inside the cooking chamber 12 by photographing the inside of the cooking chamber 12 from an upper front side.

In another example, the camera 80 may be disposed at an upper side of the cavity 11. Such a camera 80 can acquire an image related to the food accommodated inside the cooking chamber 12 by photographing the inside of the cooking chamber 12 from above.

In yet another example, the cooking appliance may include both a camera 80 disposed at the upper side of the cavity 11 and a camera 80 installed on the door 30. The cooking appliance can photograph a subject to be photographed by using each of the plurality of cameras 80 disposed as such, and can extract three-dimensional information of the subject to be photographed based on images transmitted respectively from the plurality of cameras 80.

The position of the camera 80 is not limited to the positions described above and may be appropriately selected from among various positions suitable for effectively photographing the food, the mounting protrusions 15, the rack 70, and the like (hereinafter collectively referred to as "subjects to be photographed") accommodated in the cooking chamber 12.

In this embodiment, the cooking appliance is illustrated as including the camera 80 installed on the door 30. The camera 80 photographs the inside of the cooking chamber 12, specifically an area that falls within a field of view (FOV) of the camera 80. In this embodiment, the field of view of the camera 80 is illustrated as being set as follows.

In the up-down direction, the field of view of the camera 80 may be set so that both a front end of a rack 15 mounted at the lowest level, for example, at the first level, and a front end of a rack 15 mounted at the highest level, for example, at the seventh level, are included within a photographing range of the camera 80. In addition, in the lateral direction, the field of view of the camera 80 may be set so that both side ends of the rack 15 are included within the photographing range.

The cooking appliance of this embodiment may further include a controller 90. The controller 90 may be provided to control the operation of the cooking appliance. For example, the controller 90 may control the operation of the heating device according to input signals input through a knob 51 or a switch provided on the control panel 50.

Further, an image acquired by the camera 80 may be transmitted to the controller 90. The controller 90 can extract information such as the type, size, and surface color of the food based on an image received from the camera 80.

In addition, the controller 90 can also extract information on the positions of the mounting protrusions 15, the rack 70, the position indicator 75, and the like, based on an image received from the camera 80.

Further, according to this embodiment, the controller 90 can divide the cooking chamber 12 into a plurality of separate areas based on an image obtained from the camera 80. For example, a hexahedral space including most areas of the cooking chamber 12 may be divided by a plurality of separate areas each having a hexahedral shape.

For example, as shown in FIGs. 11 and 12, the cooking chamber 12 may be divided into a total of 27 separate areas (reference numerals 1 to 9 in FIG. 12. In this case, nine separate areas may be arranged to form a rectangle on a virtual plane orthogonal to the front-rear axis, and by arranging such a set of nine separate areas in three units (reference symbols z1 to z3 in FIG. 12 along the front-rear direction, a total of 27 separate areas may be arranged in the cooking chamber 12.

The controller 90 can divide the cooking chamber 12 into a plurality of separate areas as described above, and can select, among the thus-divided plurality of separate areas, a target to which hot air is to be sent as a selected area. A detailed description thereof will be given later.

### [Control Process of the Cooking Appliance]

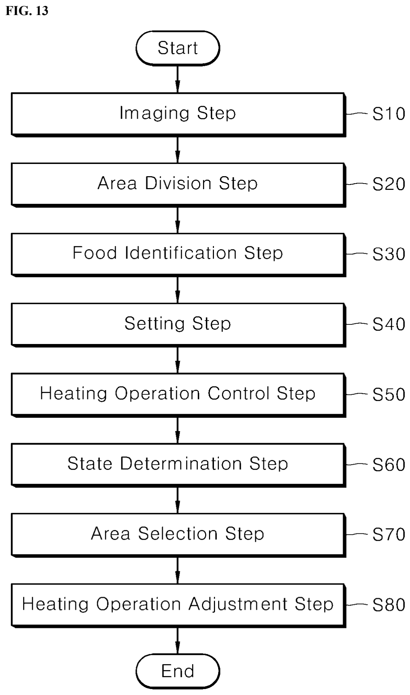

FIG. 13 is a flowchart showing a control process of a cooking appliance according to an embodiment of the present invention.

Hereinafter, with reference to FIGs. 2 and 3 and FIGs. 9 to 13, an automatic cooking control process of the cooking appliance according to an embodiment of the present invention will be described.

Referring to FIGs. 2 and 3 and FIG. 13, the cooking appliance according to this embodiment can provide an automatic cooking function using the camera 80. The cooking appliance can analyze food-related video or image acquired by the camera 80 to determine the type and size of the food or to judge the cooking progress of the food, and can control the cooking operation of the cooking appliance based on the thus-analyzed information.

A user may select an automatic cooking mode by operating a knob 51 or a switch provided on the control panel 50. When the automatic cooking mode is selected, the cooking appliance may first proceed to an imaging step (S10 to provide the automatic cooking function. In the imaging step (S10, the cooking chamber 12 may be photographed by the camera 80 to acquire a three-dimensional image of an internal space of the cooking chamber 12.

In addition, in the imaging step (S10, the camera 80 may photograph subjects to be photographed such as food accommodated inside the cooking chamber 12, the mounting protrusions 15, and the rack 70, thereby acquiring images thereof.

As shown in FIGs. 11 to 13, the images photographed by the camera 80 as described above may be transmitted to the controller 90. The controller 90 may divide the cooking chamber 12 into a plurality of separate areas based on the images acquired in the imaging step (S10 (S20: area division step).

In this embodiment, the controller 90 is illustrated as dividing the cooking chamber 12 into a total of 27 separate areas. For example, each separate area may be a rectangular-parallelepiped shape, and the 27 separate areas may be arranged to form a single rectangular parallelepiped. However, the present invention is not limited thereto, and a size and a shape of each separate area and the number of separate areas may vary depending on the size, shape, and internal structure of the cooking appliance.

In addition, the controller 90 may recognize the mounting protrusions 15 and the rack 70 in the images acquired in the imaging step (S10. At this time, the controller 90 may recognize the entire rack 70 in the images acquired in the imaging step, or may recognize only a portion of the rack 70, for example, only the position indicator 75.

For example, the controller 90 may recognize the position indicator 75 in the images acquired in the imaging step (S10 and may ascertain the position of the rack 70 based on the recognized position indicator 75. Through this, the controller 90 can ascertain the position of food placed on the rack 70 (hereinafter referred to as a "cooking subject").

In addition, the camera 80 can photograph the cooking subject accommodated inside the cooking chamber 12 to acquire an image thereof, and the controller 90 can ascertain information on the cooking subject using the image thus acquired (food identification step; S30. For example, in the food identification step (S30, the controller 90 can ascertain the type and size of the food.

When information such as the type and size of the food is ascertained, the controller 90 can set a cooking operation of the cooking appliance so that optimal cooking for the ascertained food can be performed (setting step; S40. In the setting step (S40, heating intensity, heating time, and the like suitable for cooking the food ascertained in the food identification step (S30 may be set.

Then, the controller 90 may control the operation of the heating device so that automatic cooking is performed according to the heating intensity and heating time set in the setting step (S40 (heating operation control step; S50.

While automatic cooking is performed, the camera 80 photographs the cooking chamber 12, and may photograph the cooking chamber 12 such that a surface color of the cooking subject being cooked in the cooking chamber 12 can be identified, thereby acquiring an image. The controller 90 extracts information regarding the surface color of the cooking subject from the image thus acquired and ascertains how much the cooking subject is cooked through the extracted information (state determination step; S60.

For example, the cooking appliance stores information related to surface colors according to degrees of doneness of food (hereinafter, "standard color information"), and the controller 90 may compare the surface color of the cooking subject acquired by the camera 80 with the standard color information to ascertain how much the food is actually cooked.

According to this embodiment, the controller 90 can divide the cooking chamber 12 into a plurality of separate areas, and in the state determination step (S60, the state of the cooking subject for each separate area may be ascertained. For example, in the state determination step (S60, the controller 90 can ascertain how much the cooking subject is cooked for each separate area.

When the degree of doneness of the cooking subject for each separate area is ascertained as described above, the controller 90 may select, according to the state of the cooking subject ascertained in the state determination step (S60, a target to which hot air is to be sent among the plurality of separate areas (area selection step; S70. The selected target is referred to as a selected area.

For example, the controller 90 may ascertain which portion of the cooking subject is insufficiently cooked and may select, as the selected area, the separate area in which the portion of the cooking subject ascertained as insufficiently cooked is located.

For example, when it is ascertained that a degree of doneness is insufficient at an upper-left portion on a front side of the cooking subject, the controller 90 may select, as the selected area, the separate area (B) in which that portion is located. In another example, when it is ascertained that a degree of doneness is insufficient at an upper-right portion on a rear side of the cooking subject, the controller 90 may select, as the selected area, the separate area (A) in which that portion is located.

When the selection of the selected area is completed as described above, the controller 90 may adjust the operation of the heating device so that hot air is sent to the selected area (heating operation adjustment step; S80.

In the heating operation adjustment step (S80, the operation of the heating device may be adjusted such that at least one of a discharge position and a reach distance of a main stream of hot air discharged from the heating device is adjusted. In this embodiment, it is illustrated that the operation of the heating device is adjusted such that both the discharge position and the reach distance of the main stream of hot air discharged from the heating device are adjusted.

In the heating operation adjustment step (S80, the controller 90 may ascertain the position of the selected area along the front-rear direction and may adjust the operation of the heating device such that the reach distance of the main stream of hot air discharged from the heating device is adjusted. For example, the controller 90 may ascertain whether the selected area is disposed in a front region (z1 of the cooking chamber 12, in a rear region (z3 of the cooking chamber 12, or in a middle region (z2 of the cooking chamber 12, and may adjust a rotational speed of the fan module 25 according to the ascertained result.

For example, the controller 90 may increase the rotational speed of the fan module 25 as the position of the selected area is biased more toward the front, and may decrease the rotational speed of the fan module 25 as the position of the selected area is biased more toward the rear.

In addition, in the heating operation adjustment step (S80, the controller 90 may ascertain the position of the selected area on a coordinate plane orthogonal to the front-rear axis and may adjust the operation of the heating device such that a discharge position of hot air discharged from the heating device is adjusted. For example, the controller 90 may ascertain where the selected area is disposed on the coordinate plane and may adjust a rotational direction of the fan module 25 according to the ascertained result.

According to this embodiment, the fan module 25 rotating in the forward direction can blow hot air in a direction between the forward direction and the centrifugal direction, and the fan module 25 rotating in the reverse direction can blow hot air in a direction between the reverse direction and the centrifugal direction.

For example, a main stream of hot air generated by the fan module 25 rotating in the forward direction may be discharged to the outside of the heating device through the first front discharge ports 22a) disposed respectively in the second quadrant (B) and the fourth quadrant (D) of the fan cover 21. In addition, a main stream of hot air generated by the fan module 25 rotating in the reverse direction may be discharged to the outside of the heating device through the second front discharge ports 22b) disposed respectively in the first quadrant (A) and the third quadrant (C) of the fan cover 21.

For example, when the selected area is the separate area 1 near an upper-left of the cooking chamber 12 or the separate area 9 near a lower-right of the cooking chamber 12, or a location adjacent thereto-that is, when the selected area is located in the second quadrant or the fourth quadrant of the cooking chamber 12-the controller 90 may rotate the fan module 25 in the forward direction.

Accordingly, the main stream of hot air generated by the heating device may be discharged into the cooking chamber 12 through the first front discharge port 22a). The main stream of hot air thus discharged may flow toward the cooking subject disposed in the selected area, that is, toward the separate area located in the second quadrant or the fourth quadrant of the cooking chamber 12.

In addition, when the selected area is the separate area 3 near an upper-right of the cooking chamber 12 or the separate area 7 near a lower-left, or a location adjacent thereto-that is, when the selected area is located in the first quadrant or the third quadrant of the cooking chamber 12-the controller 90 may rotate the fan module 25 in the reverse direction.

Accordingly, the main stream of hot air generated by the heating device may be discharged into the cooking chamber 12 through the second front discharge port 22b). The main stream of hot air thus discharged may flow toward the cooking subject disposed in the selected area, that is, toward the separate area located in the first quadrant or the third quadrant of the cooking chamber 12.

As a result of adjusting the discharge position of hot air by adjusting the rotational direction of the fan module 25 as described above, a flow of hot air generated by the heating device can be concentrated toward the selected area, and thus heating can be intensively performed on a portion of the cooking subject located in the selected area.

As one example, when the selected area is in the front region (z1 of the cooking chamber 12 and is located in the upper-left separate area 1 or the lower-right separate area 9, the controller 90 may rotate the fan module 25 in a forward direction and, at the same time, may rotate the fan module 25 at the fastest rotational speed among the three-stage rotational speeds of the fan module 25. Accordingly, the main stream of hot air generated by the heating device is discharged into the cooking chamber 12 through the first front discharge port 22a) and may flow toward the upper-left separate area 1 and the lower-right separate area 9 of the front region (z1 of the cooking chamber 12 and areas adjacent thereto.

As a result, heating can be concentrated on the portions of the cooking subject located in the upper-left separate area 1 and the lower-right separate area 9 of the front region (z1 of the cooking chamber 12. That is, the heating device can concentrate heat energy on a target portion among parts of the cooking subject.

In another example, when the selected area is in the rear region (z3 of the cooking chamber 12 and is located in the upper-right separate area 3 or the lower-left separate area 7, the controller 90 may rotate the fan module 25 in the reverse direction and, at the same time, may rotate the fan module 25 at the slowest rotational speed among the three-stage rotational speeds of the fan module 25. Accordingly, the main stream of hot air generated by the heating device is discharged into the cooking chamber 12 through the second front discharge port 22b), and may flow toward the upper-right separate area 3 and the lower-left separate area 7 of the rear region (z3 of the cooking chamber 12 and areas adjacent thereto.

As a result, heating can be concentrated on the portions of the cooking subject located in the upper-right separate area 3 and the lower-left separate area 7 of the rear region (z3 of the cooking chamber 12.

In addition, in the heating operation adjustment step (S80, the controller 90 may ascertain the position of the selected area along the front-rear direction and may adjust the heating time of the heating device according to the ascertained result. For example, the controller 90 may ascertain whether the selected area is disposed in the front region (z1 of the cooking chamber 12, in the rear region (z3 of the cooking chamber 12, or in the middle region (z2 of the cooking chamber 12, and may adjust a heating amount (heat output) of the heating device according to the ascertained result.

For example, the adjustment of the heating amount of the heating device may be performed by adjusting ON/OFF timing of heaters that constitute the heating device, such as the broil heater and the heating unit 23 of the convection device 20. For example, when the selected area is disposed in the front region (z1 of the cooking chamber 12, the controller 90 may relatively increase an ON time of the heater compared to when the selected area is disposed in the middle region (z2 of the cooking chamber 12, thereby increasing the heating amount of the heating device. Also, when the selected area is disposed in the rear region (z3 of the cooking chamber 12, the controller 90 may relatively decrease the ON time of the heater compared to when the selected area is disposed in the middle region (z2 of the cooking chamber 12, thereby decreasing the heating amount of the heating device.

By adjusting the heating amount of the heating device as described above, not only can the uniformity of cooking quality be improved, but also energy consumption due to heating of the cooking subject during the cooking process can be effectively reduced.

The cooking appliance of this embodiment as described above can perform heating of the cooking subject while concentrating heat energy on a portion of the cooking subject that requires a higher level of heating compared to other portions. The cooking appliance of this embodiment can uniformly heat the entire area of the cooking subject even when the cooking subject is widely spread out or when the size of the cooking subject is large.

That is, the cooking appliance of this embodiment can improve the uniformity of cooking quality by performing heating of the cooking subject while concentrating heat energy on a portion of the cooking subject that requires a higher level of heating compared to other portions.

The cooking appliance of this embodiment as described above can automatically ascertain the state of the cooking subject for each separate area and can concentrate heat energy on a target portion requiring concentrated heating using the ascertained result, thereby increasing the uniformity of cooking quality and providing an automatic cooking function of improved performance.

In addition, the cooking appliance of this embodiment is configured so that heat energy can be concentrated, as necessary, on a target portion among parts of the cooking subject, thereby allowing a portion desired by the user among the parts of the cooking subject to be heated more intensively.

For example, when the user manually selects a target for concentrated heating or manually adjusts the rotational direction and rotational speed of the fan module 25, a specific portion desired by the user among parts of the cooking subject can be heated more intensively.

For example, by manually selecting a target for concentrated heating or by manually adjusting the rotational direction and rotational speed of the fan module 25, the user can cause more heating to be applied to a front portion at the upper-left of the cooking subject, or cause more heating to be applied to a rear portion at the upper-right of the cooking subject.

As described above, the cooking appliance of this embodiment is configured to allow a portion desired by the user among parts of the cooking subject to be heated more intensively, thereby enabling more diverse cooking results to be provided according to the user's intention and thus more effectively improving user satisfaction.

The embodiments are described above with reference to a number of illustrative embodiments thereof. However, the embodiments are provided as examples, and numerous other modifications and equivalent embodiments can be drawn by one having ordinary skill in the art from the embodiments. Thus, the technical scope of protection of the subject matter of the disclosure is to be defined according to the following claims.

### [Description of Reference Numerals]

10: Main body
11: Cavity
12: Cooking chamber
15: Mounting protrusion
20: Convection device
21: Fan cover
21a: Intake port
21b: Discharge port
22a: First front discharge port
22b: Second front discharge port
23: Heating unit
25: Fan module
30: Door
40: Cooktop Section
50: Control Panel
51: Knob
52: Display
60: Electrical Compartment
70: Rack
75: Position Indicator
80: Camera
90: Controller

## Claims

1. A control method for a cooking appliance comprising a main body forming a cooking chamber, a camera for imaging the cooking chamber, and a heating device operable to supply hot air to the cooking chamber, the method comprising:
an imaging step of imaging the cooking chamber with the camera;
a state determination step of dividing the cooking chamber into a plurality of separate areas based on the image acquired by the camera and determining the state of a cooking subject in each of the separate areas;
an area selection step of selecting a target area, among the plurality of separate areas, to which hot air is to be supplied, based on the state of the cooking subject determined in the state determination step; and
a heating operation control step of controlling the operation of the heating device so that hot air is supplied toward the selected area,
wherein in the heating operation control step, the operation of the heating device is controlled such that at least one of a discharge position and a reach distance of a main stream of hot air discharged from the heating device is adjusted.

2. The control method of claim 1, wherein in the heating operation control step, a position of the selected area in a front-rear direction is determined, and the operation of the heating device is controlled such that the reach distance of the main stream of hot air discharged from the heating device is adjusted.

3. The control method of claim 1 or 2, wherein the heating device comprises a fan rotatable to send hot air into the cooking chamber, and wherein in the heating operation control step, the rotational speed of the fan is adjusted.

4. The control method of claim 3, wherein in the heating operation control step, the closer the position of the selected area is to the front, the higher the rotational speed of the fan is increased.

5. The control method of any one of claims 1 to 4, wherein in the heating operation control step, both a position of the selected area in the front-rear direction and a position of the selected area on a coordinate plane orthogonal to the front-rear axis are determined, and the operation of the heating device is controlled such that both the reach distance and the discharge position of the main stream of hot air discharged from the heating device are adjusted.

6. The control method of any one of claims 1 to 5, wherein controlling the operation of the heating device comprises identifying a position of the selected area in the front-rear direction and a position of the selected area on a coordinate plane orthogonal to the front-rear axis, and controlling the operation of the heating device such that both the reach distance and the discharge position of the main stream of hot air are adjusted.

7. The control method of claim 6, wherein the heating device comprises a fan rotatable in both a forward direction and a reverse direction about a front-rear axis, wherein the discharge position of the main stream of hot air discharged from the heating device varies according to the rotation direction of the fan, and wherein in the heating operation control step, the rotation direction of the fan is adjusted according to the position of the selected area on the coordinate plane.

8. The control method of any one of claims 1 to 7, wherein in the heating operation control step, both a position of the selected area in the front-rear direction and a position of the selected area on a coordinate plane orthogonal to the front-rear axis are determined, and wherein in the heating operation control step, a heating amount of the heating device is adjusted according to the position of the selected area on the coordinate plane.

9. A cooking appliance comprising:
a main body having a cooking chamber formed therein;
a camera for imaging the cooking chamber;
a controller configured to divide the cooking chamber into a plurality of separate areas based on an image acquired by the camera and to select, as a selected area, one of the separate areas to which hot air is to be supplied; and
a heating device operable to supply hot air toward the selected area,
wherein the controller controls the operation of the heating device such that at least one of a discharge position and a reach distance of a main stream of hot air discharged from the heating device is adjusted.

10. The cooking appliance of claim 9, wherein the heating device comprises a fan cover having a first front discharge port and a second front discharge port, and a fan rotatable about a front-rear axis,
wherein the first front discharge port and the second front discharge port are disposed at different positions on a coordinate plane orthogonal to a rotation axis of the fan and having an origin located on the rotation axis of the fan,
wherein the fan rotates in a forward direction to discharge a main stream of hot air from inside the heating device into the cooking chamber through the first front discharge port, or rotates in a reverse direction to discharge a main stream of hot air from inside the heating device into the cooking chamber through the second front discharge port, and
wherein the controller adjusts the rotation direction of the fan according to the position of the selected area on the coordinate plane.

11. The cooking appliance of claim 10, wherein the first front discharge port and the second front discharge port are disposed at a front surface of the fan cover.

12. The cooking appliance of claim 10 or 11, wherein among quadrants of the coordinate plane divided by a front-rear axis and a vertical axis intersecting at the origin, the first front discharge port is disposed in at least one of a second quadrant and a fourth quadrant, and the second front discharge port is disposed in at least one of a first quadrant and a third quadrant.
